# EUROPEAN PATENT APPLICATION

(11) **EP 3 477 152 A1**
(43) Date of publication of application: **01.05.2019**
(21) Application number: 18202541.1
(22) Date of filing: 25.10.2018
(51) Int. Cl.: F16H 3/72, F16H 37/04

(54) **SPEED CHANGE GEARING**

(30) Priority: 26.10.2017 IT 201700121475
(71) Applicant: Micheli, Alfonso, 00061 Anguillara Sabazia (IT)
(72) Inventor: Micheli, Alfonso, 00061 Anguillara Sabazia (IT)
(74) Representative: Cioncoloni, Giuliana

(57) **Abstract**

A continuous gear change for an internal combustion engine comprises a planetary gear box (7) with an input shaft (3) and an output shaft (8), and, inside it, a driving wheel (4), a planetary gear (5) and a driven wheel (6) keyed on to the output shaft (8). It also comprises a first free wheel (12) keyed on the input shaft (3), and a second free wheel (13) keyed on the output shaft (8), the two free wheels (12) and (13) having different diameters with respect to one another; a drive shaft (16) parallel to the input (3) and output (8) shafts; a gear (14) keyed onto the drive shaft (16) and engaged with the free wheel (12), keyed onto the input shaft (3); and a gear (15) keyed onto the drive shaft (16) and engaged with the second free wheel (13).

## Description

The present invention relates to a continuous gear change for an internal combustion engine.

DE 10 2008 061 476 B4 describes a power unit connected by a friction clutch to a planetary gear box, similar to a differential, comprising an input shaft and an output shaft and, inside it, a driving wheel, a planetary gear and a driven wheel. The driven wheel is keyed on to the output shaft. A braking device can change the rotation speed of the planetary gear box. If the planetary gear box is not braked, it can freely rotate coaxially to the input shaft and output shaft. If it is braked, its rotation movement is slowed down, and a corresponding torque is transmitted from the input shaft to the output shaft.

The planetary gear box according to the aforementioned German patent can be used as a variable speed drive, for example on boats or on gearless vehicles, such as those that may be driven without a license. Due to the absence of gears, the engine performance depends on its so-called kinematic elasticity, which is higher the more regular the engine momentum, and its so-called dynamic elasticity, which defines the engine's property to deliver rapidly increasing torque values as its rpm decreases. Therefore, the purpose of the brake on the planetary gear box is basically to improve the dynamic elasticity of the engine.

FR 1 103 695 A describes a continuous gear change for an internal combustion engine, comprising a planetary gear box with an input shaft and an output shaft, and, inside it, a driving wheel, a planetary gear and a driven wheel keyed on to the output shaft. The gear change further comprises a first free wheel, a drive shaft parallel to the input shaft and the output shaft, and a gear keyed onto the drive shaft.

The present invention aims at allowing the power delivered by the engine to quickly adapt to the load conditions experienced by the vehicle moving forward.

The main object of the present invention is to adjust the torque transmitted by the engine on the basis of the resistance encountered in moving forward up to given transmission ratios.

To achieve the aforementioned object, the present invention, as defined in claim 1 attached to the present description, provides a continuous gear change for internal combustion engine, comprising a planetary gear box with an input shaft to the planetary gear box which is connected to the engine crankshaft of an internal combustion engine and an output shaft from the planetary gear box, inside the planetary gear box there being a driving wheel, a planetary gear and a driven wheel keyed to the output shaft from the planetary gear box, and at least one braking device, the continuous gear change also comprising:
- a first free wheel keyed to the input shaft of the planetary gear box, and a second free wheel keyed to the output shaft of the planetary gear box, the two free wheels having a different number of teeth;
- a drive shaft parallel to the input shaft to the planetary gear box and to the output shaft from the planetary gear box;
- a first gear keyed onto the drive shaft and engaged with the free wheel, keyed to the input shaft; and
- a second gear keyed on to the drive shaft and connected to the second free wheel.

Further characteristics and advantages of the invention will become clearer from the description of embodiments of the continuous gear change in question, illustrated by way of a non-limiting example in the accompanying drawings, wherein:
- Figure 1 is a schematic representation of a continuous gear change for an internal combustion engine according to a first embodiment of the present invention;
- Figure 2 is a schematic representation of the continuous gear change for an internal combustion engine according to a second embodiment of the present invention; and
- Figure 3 is a schematic representation of the continuous gear change for an internal combustion engine according to a third embodiment of the present invention.

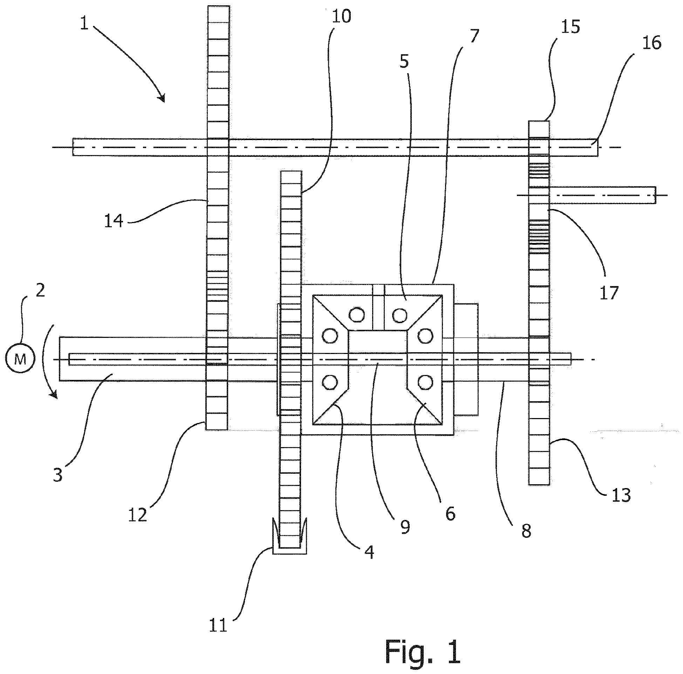

With reference to Figure 1, a first embodiment of the invention is described. It shows a continuous gear change 1 connected to an internal combustion engine. The connection to the engine is not further detailed, as a friction clutch may be present, if necessary, mounted between the crankshaft (not shown) and an input shaft 3 of the continuous gear change 1.

The input shaft 3 is integral with a driving wheel 4 which transmits the drive to a driven wheel 6 through a planetary gear 5. The driving wheel 4, the planetary gear 5 and the driven wheel 6 are contained in a planetary gear box 7, and the assembly is similar to a differential gear. The driven wheel 6 is keyed on to an output shaft 8. The input shaft 3 and the output shaft 8 are coaxial. A spindle 9 is only used as a support for the driving wheel 4, the planetary gear 5 and the driven wheel 6 inside the planetary gear box 7 and the components involved in creating drive.

According to the first embodiment of the invention shown in Figure 1, the planetary gear box 7 is connected to a brake disk 10 on which a braking device acts - the assembly being globally indicated with 11.

If the brake disc 10 is not braked by the braking device 11, the planetary gear box 7 can rotate freely, coaxially with the input shaft 3 and with the output shaft 8. If, on the other hand, a given braking force is applied to the brake disk 10, this rotation movement is slowed down, and a corresponding torque is transmitted from the input shaft 3 to the output shaft 8.

According to the first embodiment of the present invention, a first free wheel 12 is keyed onto the input shaft 3, and a second free wheel 13 is keyed onto the output shaft 8. The two free wheels 12 and 13 have a diameter and, therefore, a number of teeth, which are different from one another. In particular, in the embodiments shown, the first free wheel 12, mounted on the input shaft 3, has a smaller diameter than the second free wheel 13, mounted on the output shaft 8. The free wheels 12 and 13 engage with their respective gears 14, 15 keyed on a drive shaft 16 parallel to the input 3 and output 8 shafts of the continuous gear change according to the present invention. For the reversal of drive not to occur on the drive shaft, the second free wheel 13 is connected to the gear 15 by an idle wheel 17.

It should be understood that the continuous gear change ratios are comprised between two limit values determined by the first torque of free wheel 12 and gear 14 and by the second torque of free wheel 13 and gear 15. The first torque is used for the shorter predetermined gearing, while the second torque for the longer gearing. It is obvious that the gear ratios can be changed by replacing the first and second torques with other free wheel and gear torques of different diameters. For example, if a smaller diameter free wheel is mounted on the output shaft 8, the vehicle can make use of a higher torque at vehicle travel speeds with little resistance.

Using the continuous gear change described above, if the brake is not operated, the vehicle always travels with a torque and rpm which are those of the engine with the reduction provided by the free wheel 12 to gear 14 ratio. The free wheel 13 turns idle on the shaft 8. If maximum braking is controlled, the planetary gear box 7 is locked, and the engine torque is transferred to the axle 8, and then to the free wheel 13, and through the gear 15 to the drive axle, provided that the free wheel 12 turns idle on the shaft 3. With the brake partially actuated, the engine rpm and torque transferred to the drive axle are those comprised in the range of the two limit ratios, corresponding to the forward travelling resistance of the vehicle determined by the gradient in the road, the wind and other contingent factors. Since this correspondence could lead to critical conditions that cause the engine to stop, for example with a sharp increase in gradient, the driver of the vehicle releases the brake 11 on the planetary gear box 7; with free wheels slipping, a further part of the torque transfers to the free wheel 12 and through the gear 14 to the drive axle 16. The free wheel 12 engages according to the direction of rotation of the engine, the free wheel 13 engages according to the direction of rotation of the output axle 8.

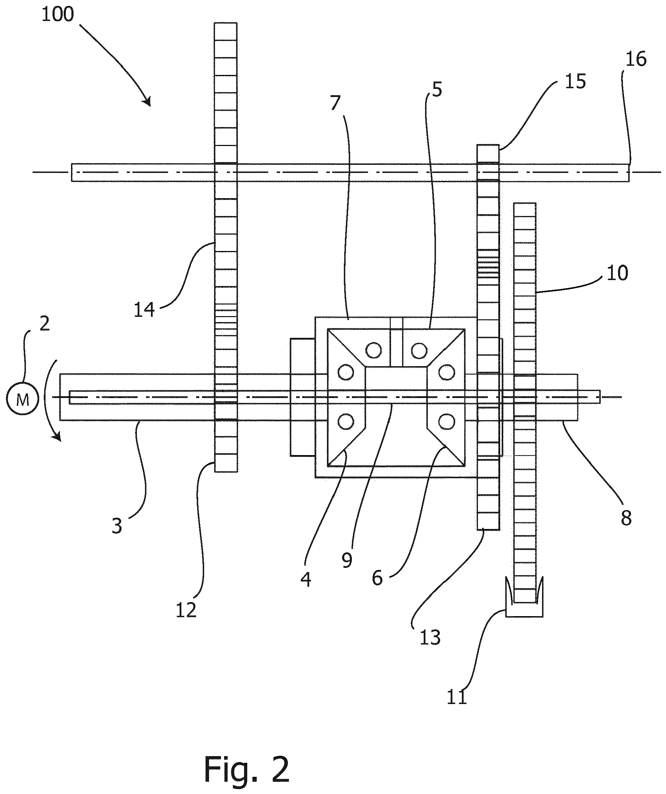

See now figure 2 which is a schematic representation of a continuous gear change 100 for an internal combustion engine according to a second embodiment of the present invention. In it, equal numbers identify parts equal to those of the first embodiment. The difference with respect to the first one consists in the fact that the brake disc 10 is mounted on the output shaft 8, and the free wheel 13 is keyed on the planetary gear box 7 and engages with the gear 15. If the brake 11 is inactive, all the torque of the engine 2 is transmitted by the free wheel 12 and the gear 14 to the drive axle 16; the driven wheel 6 and the free wheel 13 turn idle or cause differential slipping. If maximum brake 11 action is applied on the brake disc 10, the output shaft 8 as well as the driven wheel 6 remain stationary, all the engine rpm is transferred to the planetary gear box 7, and from it to the free wheel 13 and to the gear 15. The free wheel 12 turns idle on the axle 3. In this case, the rpm of the planetary gearbox 7 and therefore of the free wheel 13 is half the engine rpm. Therefore, the diameter of the gear 15 must be adjusted in advance in order to give to the drive axle 16 the designed rpm.

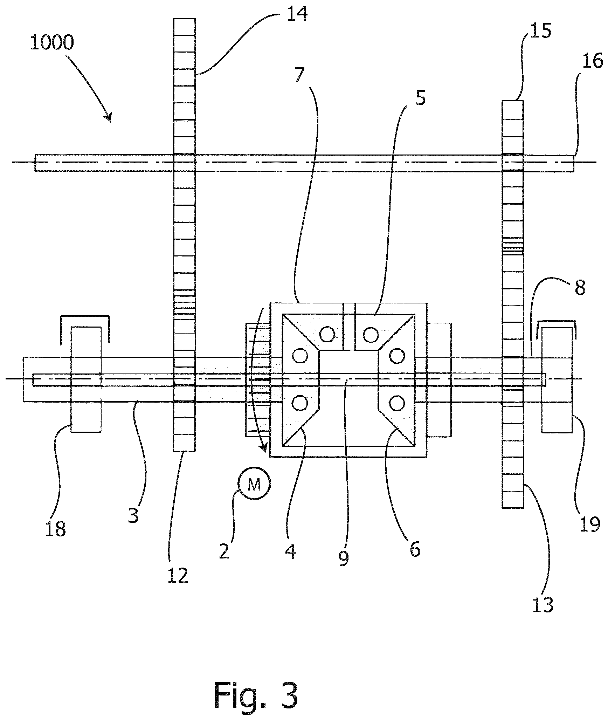

Turning to figure 3, which is a schematic representation of a continuous gear change 1000 for an internal combustion engine according to a third embodiment of the present invention, two brake devices 18 and 19 are provided, one on the input shaft 3 and the other on the output shaft 8. The engine 2 is shown to move the planetary gear box 7. In this case, if no brake is activated, both the input shaft 3 and the output shaft 8 turn at the same speed. If the brake 18 is actuated, the rpm of the driven wheel 6 and, therefore, of the output shaft 8 increases with the rotation speed of the drive axle 16 via the torque of the free wheel 12 and gear 14 through the torque of the free wheel 13 and gear 15. If the brake 19 on the output shaft 8 is operated, the rpm of the free wheel 12 and, consequently, also the rpm of the gear 14 increases, with the subsequent increase in the speed of the drive shaft 16.

From the foregoing embodiments, it should be understood that the continuous gear change according to the present invention provides a wide range of ratio options, either by modifying the diameters of the free wheels, and consequently that of the gears engaged therewith, and by changing the position of the brake, i.e. the component on which it acts. In particular, the second and third embodiments do not provide for the use of the idler wheel with a beneficial impact on efficiency.

## Claims

1. A continuous gear change for internal combustion engine, comprising a planetary gear box (7) with an input shaft (3) to the planetary gear box (7) which is connected to the engine crankshaft of an internal combustion engine and an output shaft (8) from the planetary gear box (7), inside the planetary gear box (7) there being a driving wheel (4), a planetary gear (5) and a driven wheel (6) keyed to the output shaft (8) from the planetary gear box (7), and at least one braking device (11; 18, 19), **characterised in that** it also comprises:
- a first free wheel (12) keyed to the input shaft (3) of the planetary gear box (7), and a second free wheel (13) keyed to the output shaft (8) of the planetary gear box (7), the two free wheels (12) and (13) having a different number of teeth;
- a drive shaft (16) parallel to the input shaft (3) to the planetary gear box (7) and to the output shaft (8) from the planetary gear box (7);
- a first gear (14) keyed onto the drive shaft (16) and engaged with the free wheel (12), keyed to the input shaft (3); and
- a second gear (15) keyed on to the drive shaft (16) and connected to the second free wheel (13).

2. A continuous gear change according to claim 1, wherein the input shaft (3) to the planetary gear box (7) is connected to the crankshaft of the internal combustion engine, and a braking device (11) is mounted on the planetary gear box (7) to change its rotation speed.

3. A continuous gear change according to claim 2, wherein an idle wheel (17) is interposed between the second free wheel (13) keyed on the output shaft (8) from the planetary gear box (7) and the second gear (15).

4. A continuous gear change according to claim 1, wherein the input shaft (3) to the planetary gear box (7) is connected to the drive shaft of the internal combustion engine, and a braking device (11) is mounted on the output shaft (8) from the planetary gear box (7).

5. A continuous gear change according to claim 1, wherein the planetary gear box (7) is driven by the drive shaft of the internal combustion engine, and a pair of braking devices (18, 19) is mounted on the input shaft (3) to the planetary gear box (7) and on the output shaft (8) from the planetary gear box (7) - respectively.

6. A continuous gear change according to claim 1, wherein the first free wheel (12) has a smaller number of teeth than the second free wheel (13).

7. A continuous gear change according to claim 1, wherein the first free wheel (12) has a higher number of teeth than the second free wheel (13).
